# EUROPEAN PATENT SPECIFICATION

(11) **EP 3 836 023 B1**
(45) Date of publication and mention of the grant of the patent: **09.07.2025**
(21) Application number: 18929803.7
(22) Date of filing: 18.12.2018
(51) Int. Cl.: G06K 17/00, G06T 7/73, G06T 7/70, G06T 19/00

(54) **POSITIONING METHOD AND APPARATUS FOR A DEVICE**
VERFAHREN UND GERÄT ZUR POSITIONIERUNG EINER VORRICHTUNG
PROCÉDÉ ET APPAREIL DE POSITIONNEMENT POUR UN DISPOSITIF

(30) Priority: 10.08.2018 CN 201810912145
(43) Date of publication of application: 16.06.2021
(73) Proprietor: Gree Electric Appliances, Inc. of Zhuhai, Zhuhai, Guangdong 519070 (CN)
(72) Inventor: WANG, Huijun, Zhuhai City, Guangdong 519070 (CN); ZHANG, Xin, Zhuhai City, Guangdong 519070 (CN); WANG, Zi, Zhuhai City, Guangdong 519070 (CN); LIU, Jianjun, Zhuhai City, Guangdong 519070 (CN)
(74) Representative: Berggren Oy
(86) International application number: PCT/CN2018/121704
(87) International publication number: WO 2020/029504

(56) References cited:
- CN-A- 103 366 610
- CN-A- 107 328 420
- CN-A- 108 335 365
- CN-A- 108 345 907
- US-A1- 2014 210 857
- SCHWEIGHOFER ET AL: "Robust Pose Estimation from a Planar Target", IEEE TRANSACTIONS ON PATTERN ANALYSIS AND MACHINE INTELLIGENCE, IEEE COMPUTER SOCIETY, USA, vol. 27, no. 12, 1 December 2006 (2006-12-01), pages 2024 - 2030, XP011149702, ISSN: 0162-8828, DOI: 10.1109/TPAMI.2006.252
- LIU FEI ET AL: "Precision study on augmented reality-based visual guidance for facility management tasks", AUTOMATION IN CONSTRUCTION, ELSEVIER, AMSTERDAM, NL, vol. 90, 22 February 2018 (2018-02-22), pages 79 - 90, XP085368069, ISSN: 0926-5805, DOI: 10.1016/J.AUTCON.2018.02.020
- RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127 - 136, XP032201443, ISBN: 978-1-4577-2183-0, DOI: 10.1109/ISMAR.2011.6092378

## Description

### Technical Field

The present disclosure relates to the technical field of augmented reality, and in particular to a positioning method, storage medium and a device.

### Background

AR (Augmented Reality) technology is a technology for calculating a position and angle of a camera in real time and adding a corresponding image, video and 3D model. A goal of such technology is to put a virtual world in a real world on a screen and perform interaction.

In the process of using the AR technology, AR usually establishes a virtual coordinate system, and needs to determine a position of a target in the virtual coordinate system of an AR scene, thereby achieving an AR effect. However, a problem existing in the AR application process is that it is easy for the AR technology to identify a position of a 2D image in the virtual coordinate system, but it is difficult to position a 3D image. If a physical device needs to be positioned, the current AR technology has a poor implementation effect.

For the problem in the method known to the inventors that the AR technology has a poor positioning effect for a three-dimensional object in an actual environment, no effective solution has been proposed yet.

Publication US 2014/210857 A1 provides a realization method and device for two-dimensional code augmented reality. However, the above-mentioned problem still remains unsolved.

### Summary

At least some embodiments of the present disclosure provide a positioning method and a device, so as to at least solve the technical problem in a method known to the inventors that the augmented reality technology has a poor positioning effect for a three-dimensional object in an actual environment.

One aspect according to some embodiments of the present disclosure provides a positioning method for a device according to claim 1.

In some alternative embodiments, before the augmented reality device determines the first position of the identifier in the virtual coordinate system by scanning the identifier set on the surface of a positioned device, the augmented reality device receives a trigger instruction, wherein the trigger instruction is used to indicate that the positioned device needs to be positioned; and the augmented reality device establishes the virtual coordinate system according to triggering of the trigger instruction.

In some alternative embodiments, the augmented reality device collects multiple adjacent images within an environment where the positioned device is located; and the augmented reality device extracts image feature points in the multiple adjacent images; and the augmented reality device establishes the virtual coordinate system according to the image feature points in the multiple adjacent images.

In some alternative embodiments, after the augmented reality device establishes the virtual coordinate system according to triggering of the trigger instruction, the augmented reality device determines the position of the augmented reality device in the virtual coordinate system; and after the augmented reality device determines the position of the positioned device in the virtual coordinate system according to the first position and the second position, the augmented reality device determines the position of the augmented reality device relative to the positioned device in the virtual coordinate system.

Another aspect according to some embodiments of the present disclosure further provides a device according to claim 5.

Another aspect according to some embodiments of the present disclosure further provides a storage medium. The storage medium includes a stored program, wherein when the program is running, it controls a device where the storage medium is located to execute the positioning method for the device above.

In at least some embodiments of the present disclosure, an augmented reality device obtains a first position of an identifier in a virtual coordinate system by scanning the identifier set on a surface of a positioned device; the augmented reality device obtains a second position of the identifier on the surface of the positioned device; and the augmented reality device determines a position of the positioned device in the virtual coordinate system according to the first position and the second position. **In** the solution, an identifier is set on the surface of a positioned device; a position of the identifier in a virtual coordinate system is determined by scanning the identifier; and the position of the positioned device in the virtual coordinate system is determined according to the position of the identifier in the virtual coordinate system and the position of the identifier on the surface of the positioned device, thereby solving the technical problem in the a method known to the inventors that the augmented reality technology has a poor positioning effect for a three-dimensional object in an actual environment.

### Brief Description of the Drawings

The drawings illustrated herein are used for providing further understanding of the present disclosure, and constitute a part of the present disclosure. The schematic embodiments of the present disclosure and illustrations thereof are used for explaining the present disclosure, rather than limiting the present disclosure improperly. In the drawings:
FIG. 1 is a flowchart of a positioning method for a device according to some embodiments of the present disclosure;
FIG. 2 is a schematic diagram of a positioned device and an identifier according to some embodiments of the present disclosure; and
FIG. 3 is a schematic diagram of a device according to some embodiments of the present disclosure.

### Detailed Description of the Embodiments

Hereinafter, in order to make a person skilled in the art better understand the solutions of the present disclosure, the technical solutions in the embodiments of the present disclosure are described clearly and completely with reference to the drawings in the embodiments of the present disclosure. Obviously, the embodiments as described are only parts of embodiments rather than all the embodiments of the present disclosure. Based on the embodiments of the present disclosure, the other embodiments obtained by those of ordinary skill in the art without involving any inventive effort shall fall within the scope of protection of the present disclosure.

It should be noted that the terms "first" and "second" in the description, claims, and accompanying drawings of the present disclosure are used to distinguish similar objects, and are not necessarily used to describe a specific sequence or order. It should be understood that the data so used may be interchanged where appropriate so that the embodiments of the present disclosure described herein can be implemented in sequences other than those illustrated or described herein. In addition, the terms "include" and "have", and any variations thereof are intended to cover a non-exclusive inclusion, for example, a process, method, system, product, or device that includes a series of steps or elements is not necessarily limited to those steps or elements that are clearly listed, but may include other steps or elements that are not clearly listed or inherent to such process, method, product, or device.

### Embodiment 1

According to some embodiments of the present disclosure, some embodiments of a positioning method for a device are provided. It should be noted that the steps shown in the flowchart of the figure can be executed in a computer system such as a set of computer executable instructions. Moreover, although the logic order is shown in the flowchart, in some cases, the shown or described steps can be executed in an order different from that described here.

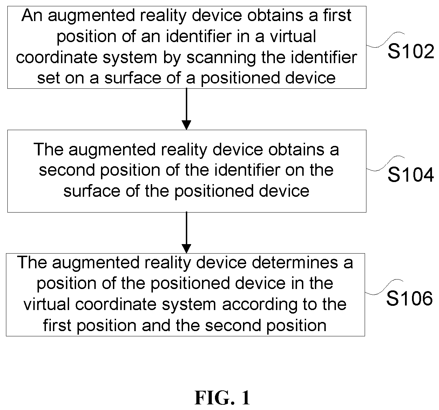

FIG. 1 is a flowchart of a positioning method for a device according to some embodiments of the present disclosure. As shown in FIG. 1, the method comprises the following steps.

Step S102, an augmented reality device obtains a first position of an identifier in a virtual coordinate system by scanning the identifier set on a surface of a positioned device.

Specifically, the identifier set on the surface of the positioned device can be an identifier formed by a 2D image, for example, can be a two-dimensional code or a bar code.

The augmented reality device can be an AR mobile device or an AR wearable device, and have a camera. In a real world, a coordinate system can be set manually. In order to achieve the augmented reality technology, image recognition needs to be performed on a positioned device collected, and the coordinate system in the real world needs to be converted into an image display coordinate system. The virtual coordinate system is the image display coordinate system used when virtual images and real images are superimposed by the augmented reality technology.

In some alternative embodiments, taking the positioned device to be an air conditioner as an example, a two-dimensional code corresponding to the air conditioner is set on the surface of the body of the air conditioner, and an AR mobile device or an AR wearable device scans the two-dimensional code on the surface of the body by using a camera, so as to determine position coordinates of the two-dimensional code in the virtual coordinate system.

More particularly, the augmented reality device establishes the virtual coordinate system, and positions the position of the augmented reality device in the virtual coordinate system, and the position of the two-dimensional code relative to the augmented reality device. If the position of the augmented reality device in the virtual coordinate system is c (x1, y1, z1), and the position of the two-dimensional code relative to the augmented reality device is (ηx, ηy, ηz), wherein η is an axis translation distance, then the position of the two-dimensional code in the virtual coordinate system is D (x2, y2, z2) = (x1+ηx, y1 +ηy, z1 +ηz).

Step S104, the augmented reality device obtains a second position of the identifier on the surface of the positioned device.

Specifically, the second position of the identifier on the surface of the positioned device can be a position of the identifier relative to the positioned device, a position that has a preset proportional relationship with the position of the identifier relative to the positioned device in a real coordinate system, or a position where the identifier is located in a custom coordinate system constructed by using a marker point on the positioned device as an origin. That is, the second position represents the relationship between the identifier and the positioned device in the real world at 1:1 or at other ratios.

Step S106, the augmented reality device determines a position of the positioned device in the virtual coordinate system according to the first position and the second position.

In the solution, the position of the identifier in the virtual coordinate system and the position of the identifier on the positioned device are determined, and therefore the position of the positioned device in the virtual coordinate system can be obtained by coordinate transformation.

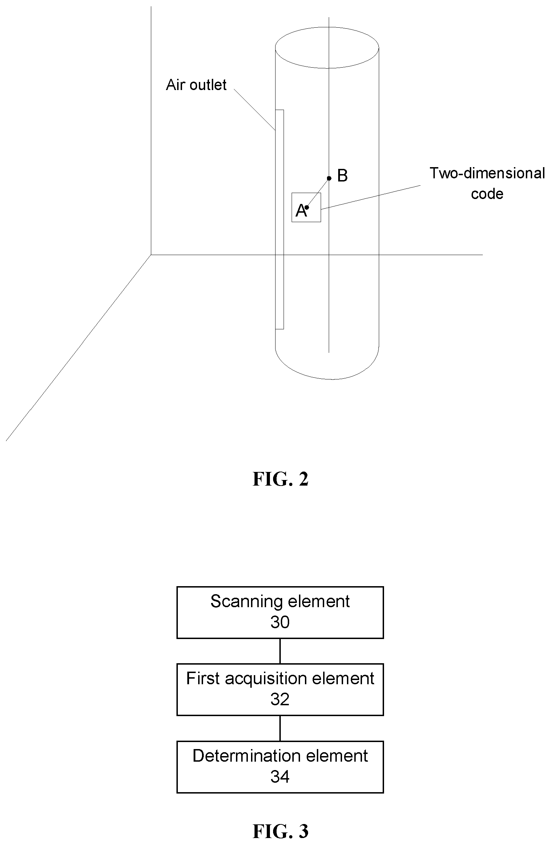

FIG. 2 is a schematic diagram of a positioned device and an identifier according to some embodiments of the present disclosure. As shown in FIG. 2, the positioned device in this example is an air conditioner. In the figure, a two-dimensional code, i.e. the identifier above, is pasted on one side of an air outlet of the surface of the air conditioner; after the augmented reality device scans the two-dimensional code, the position of the two-dimensional code in the virtual coordinate system is obtained; and then the position of the air conditioner in the virtual coordinate system is obtained according to the position of the two-dimensional code on the air conditioner.

In some alternative embodiments, taking the coordinates, i.e., D (x2, y2, z2) = (x1+ηx, y1+ηy, z1+ηz) of the two-dimensional code in the virtual coordinate system obtained in the embodiments above as an example to continue the explanation, if the position of the air outlet of the air conditioner relative to the two-dimensional code in a preset model is (Δx1, Δy1, Δz1), and a multiple relationship of the preset model is n, then the position of the air outlet of the air conditioner relative to the two-dimensional code in the real coordinate is (Δx, Δy, Δz) = n (Δx1, Δy1, Δz1); therefore, it can be obtained that the position of the air outlet of the air conditioner in the virtual coordinate system is E (x3, y3, z3) = (x1+ηx, y1 +ηy, z1 +ηz)+(Δx, Δy, Δz) = (x1+ηx, y1 +ηy, z1+ηz)+n(Δx1, Δy1, Δz1) = (x1+ηx+nΔx1, y1+ηy+nΔy1, z1+ηz+nΔz1).

From the description above, it can be determined that in the embodiments above of the present disclosure, the augmented reality device obtains a first position of an identifier in a virtual coordinate system by scanning the identifier set on the surface of a positioned device; the augmented reality device obtains a second position of the identifier on the surface of the positioned device; and the augmented reality device determines a position of the positioned device in the virtual coordinate system according to the first position and the second position. In the solution, an identifier is set on the surface of a positioned device; a position of the identifier in a virtual coordinate system is determined by scanning the identifier; and the position of the positioned device in the virtual coordinate system is determined according to the position of the identifier in the virtual coordinate system and the position of the identifier on the surface of the positioned device, thereby solving the technical problem in a method known to the inventors that the augmented reality technology has a poor positioning effect for a three-dimensional object in an actual environment.

As some alternative embodiments, before the augmented reality device determines the position of the positioned device in the virtual coordinate system according to the first position and the second position, the method further includes: the augmented reality device obtains a preset model, wherein the preset model is used to record a position relationship between the positioned device and the identifier; and the augmented reality device obtains the second position of the identifier on the surface of the positioned device includes: the augmented reality device obtains the second position on the basis of the preset model.

Specifically, the preset model may be a 1:1 physical model of the positioned device and the identifier, and may also be a model of other ratios, and is configured to characterize the position relationship between the positioned device and the identifier. The preset model may be directly stored in the augmented reality device, and the model is searched for by scanning the identifier, and may also be stored in a remote server, and the preset model is requested from the remote server by scanning the identifier.

After the preset model is obtained, the second position of the identifier on the surface of the positioned device can be determined according to the relationship between the positioned device and the identifier recorded in the preset model.

The preset model can record coordinate values, or can record an image model with coordinate values. In some alternative embodiments, in combination with FIG. 2, A is a feature point on the identifier, may be the center of the identifier, and recorded as (0,0,0); and B is the midpoint of the central axis of the air conditioner, and recorded as (x, y, z). That is, the position of the positioned device relative to the identifier as recorded in the preset model can be (x, y, z) values above.

Taking some alternative embodiments as another example, the following parameters can be obtained by means of the preset model: a two-dimensional code A (a1, b1, c1) and an air outlet of an air conditioner B (a2, b2, c2), and then in the preset model, the position of the air outlet of the air conditioner relative to the two-dimensional code is (Δx1, Δy1, Δz1)= (a2, b2, c2)-(a1, b1, c1) = (a2-a1, b2-b1, c2-c1), wherein Δ is an axis translation distance. In addition, according to the multiple relationship used when establishing the preset model, a relative position between the air outlet of the air conditioner and the two-dimensional code can be obtained, i.e. the second position, (Δx, Δy, Δz) = n [(a2-a1, b2-b1, c2-c1)] = n (a2-a1, b2-b1, c2-c1) = n (Δx1, Δy1, Δz1), wherein n is the multiple relationship of the model.

As some alternative embodiments, before the augmented reality device obtains the position of the identifier in the virtual coordinate system by scanning the identifier set on the surface of a positioned device, the method further includes: the augmented reality device receives a trigger instruction, wherein the trigger instruction is used to indicate that the positioned device needs to be positioned; and the augmented reality device establishes the virtual coordinate system according to triggering of the trigger instruction.

Specifically, the trigger instruction can be initiated by a user to the augmented reality device, and after receiving the trigger instruction, the augmented reality device starts tasks related to virtual reality, including establishing the virtual coordinate system.

As some alternative embodiments, the augmented reality device establishes the virtual coordinate system according to triggering of the trigger instruction includes: the augmented reality device collects multiple adjacent images within an environment where the positioned device is located; the augmented reality device extracting image feature points in the multiple adjacent images; and the augmented reality device establishing the virtual coordinate system according to the image feature points in the multiple adjacent images.

The virtual coordinate system can be established by AR+ simultaneous localization and mapping (SLAM) technology. The technology acquires an environment image by using a camera, extracts feature points in adjacent images, and determines a virtual coordinate system within a space according to the relative positions of the feature points.

As some alternative embodiments, after the augmented reality device establishes the virtual coordinate system according to triggering of the trigger instruction, the method further includes: the augmented reality device determines the position of the augmented reality device in the virtual coordinate system; and after the augmented reality device determines the position of the positioned device in the virtual coordinate system according to the first position and the second position, the method further includes: the augmented reality device determines the position of the augmented reality device relative to the positioned device in the virtual coordinate system.

The augmented reality device determines the position of the augmented reality device in the virtual coordinate system, i.e., determines the position of the augmented positioned device in the virtual coordinate system, after determining the position of the augmented reality positioned device in the virtual coordinate system and determining the position of the positioned device in the virtual coordinate system, the position of the positioned device relative to the augmented reality device can be obtained.

After obtaining positions of indoor positioned devices relative to the virtual coordinate system by using the method, a position coordinate system of the augmented reality device relative to the positioned devices in the whole room can be determined, thereby being applied to the construction of position relationships of the indoor objects, and being for other virtual reality applications.

Also in the embodiments above, according to the calculation results of the embodiments above, if the position of the augmented reality device in the virtual coordinate system is c(x1, y1, z1), and the position of the air outlet of the air conditioner in the virtual coordinate system is (x3, y3, z3), then it can be obtained that the position of the augmented reality device relative to the air outlet of the air conditioner is (δx, δy, δz) = |(x1, y1, z1) - (x3, y3, z3)| = |(ηx+nΔx1, ηy+nΔy1, ηz+nΔz1)|, wherein, δ is the axis translation distance, the portion indicating the position of the air conditioner can be "the central axis of the whole air conditioner", or can also be "the central axis of the air outlet component of the air-conditioner", and in the embodiments above, "the central axis of the air outlet component of the air-conditioner" is used to indicate the position of the air-conditioner.

As some alternative embodiments, after the augmented reality device determines the position of the positioned device in the virtual coordinate system according to the first position and the second position, the method further includes: the augmented reality device determines the position of any one of positioned devices relative to other positioned devices in the virtual coordinate system.

In the solution above, the position of a positioned device relative to other positioned devices is determined according to the position of the positioned device in the virtual coordinate system, thereby establishing a position coordinate system of the positioned devices within the room.

The positioned device in the solution above can be any one of home appliances. In some alternative embodiments, a simulation model with a two-dimensional code can be established for any one of the home appliances within a room, so as to determine the relative position of the two-dimensional code on the surface of any one of the home appliances. The two-dimensional code is scanned and identified to position the position coordinates of the two-dimensional code in a virtual coordinate system, and then position coordinates of a home appliance corresponding to the two-dimensional code in the virtual coordinate system are acquired, thereby establishing a relative position coordinate system based on home appliances and furniture of the whole room, being used in scenarios requiring intelligent control of home.

### Embodiment 2

According to some embodiments of the present disclosure, some embodiments of a device are provided. FIG. 3 is a schematic diagram of a device according to some embodiments of the present disclosure. As shown in FIG. 3, the device comprises:
a scanning element 30, configured to obtain, by an augmented reality device, a first position of an identifier in a virtual coordinate system by scanning the identifier set on a surface of a positioned device;
a first acquisition element 32, configured to obtain, by the augmented reality device, a second position of the identifier on the surface of the positioned device; and
a determination element 34, configured to determine, by the augmented reality device, a position of the positioned device in the virtual coordinate system according to the first position and the second position.

The device further includes: a second acquisition element, configured to obtain, by the augmented reality device, a preset model, wherein the preset model is used to record a position relationship between the positioned device and the identifier; and the first acquisition element includes: a determination sub-element, configured to obtain, by the augmented reality device, the second position on the basis of the preset model.

As some alternative embodiments, the device further includes: a reception element, configured to receive, by the augmented reality device, a trigger instruction before the augmented reality device obtains the first position of the identifier in the virtual coordinate system by scanning the identifier set on the surface of a positioned device, wherein the trigger instruction is used to indicate that the positioned device needs to be positioned; and an establishment element, configured to establish, by the augmented reality device, the virtual coordinate system according to triggering of the trigger instruction.

As some alternative embodiments, the establishment element includes: a collection sub-element, configured to collect, by the augmented reality device, multiple adjacent images within an environment where the positioned device is located; an extraction sub-element, configured to extract, by the augmented reality device, image feature points in the multiple adjacent images; and an establishment sub-element, configured to establish, by the augmented reality device, the virtual coordinate system according to the image feature points in the multiple adjacent images.

As some alternative embodiments, the device further comprises: a first position determination element, configured to determine, by the augmented reality device, the position of the augmented reality device in the virtual coordinate system after the augmented reality device establishes the virtual coordinate system according to triggering of the trigger instruction; and a second position determination element, configured to determine, by the augmented reality device, the position of the augmented reality device relative to the positioned device in the virtual coordinate system after the augmented reality device determines the position of the positioned device in the virtual coordinate system according to the first position and the second position.

The device further includes: a third position determination element, configured to determine, by the augmented reality device, the position of any one of positioned devices relative to other positioned devices in the virtual coordinate system after the augmented reality device determines the position of the positioned device in the virtual coordinate system according to the first position and the second position.

### Embodiment 3

According to some embodiments of the present disclosure, a storage medium is provided. The storage medium includes a stored program, wherein the program is running, controls a device where the storage medium is located to execute the positioning method for the device in Embodiment 1.

### Embodiment 4

According to some embodiments of the present disclosure not covered by the claims, a processor is provided. The processor is used for running a program, wherein the program, when running, executes the positioning method for the device in Embodiment 1.

The sequence numbers of the embodiments above of the present disclosure are only for description, but do not denote the preference of the embodiments.

In the above-mentioned embodiments of the disclosure, the description of each of the embodiments has its own emphasis. For the part not detailed in some embodiments, please refer to the relevant description of other embodiments.

In the embodiments provided in the present disclosure, it should be understood that the disclosed technical content may be implemented in other manners. The device embodiments described above are only schematic. For example, the division of the element can be logical function division, and there can be other division methods in the actual implementation, for example, multiple elements or components can be combined or integrated into another system, or some features can be ignored or not executed. In addition, the mutual coupling or direct coupling or communication connection shown or discussed may be indirect coupling or communication connection through some interfaces, elements, and may be in the form of electricity or other forms.

The element described as a separation component may or may not be physically separated, and the component displayed as an element may be or may not be a physical element, that is, it may be located in one place or distributed on multiple elements. Some or all elements can be selected according to the actual needs to realize the purpose of the solutions of the embodiments.

In addition, each of functional elements in each of the embodiments of the present disclosure can be integrated into a processing element, or each of the elements can be present independently, or two or more elements can be integrated in one element. The integrated element may be implemented in a form of hardware, and may also be implemented in a form of a software functional element.

When the integrated element is implemented in the form of a software functional element and sold or used as an independent product, the integrated element may be stored in a computer readable storage medium. Based on such understanding, the essential technical solution of the disclosure or the part that contributes to the method known to the inventors or the whole or part of the technical solution can be embodied in the form of software products. The computer software product is stored in a storage medium and includes several instructions to enable a computer device (which may be a personal computer, a server or a network device, etc.) to execute all or part of the steps of the method described in various embodiments of the disclosure. The storage media mentioned above includes USB flash disk, Read-Only Memory (ROM), Random Access Memory (RAM), mobile hard disk, magnetic disk or optical disk, etc., which can store program codes.

The contents above are only some embodiments of the disclosure. It should be pointed out that for a person of ordinary skill in the technical field, several improvements and refinements can be made without departing from the principle of the disclosure.

### Industrial Applicability

As described above, the positioning method and device provided in at least some embodiments of the present disclosure have the following beneficial effects: an identifier is set on the surface of a positioned device; a position of the identifier in a virtual coordinate system is determined by scanning the identifier; and a position of the positioned device in the virtual coordinate system is determined according to the position of the identifier in the virtual coordinate system and the position of the identifier on the surface of the positioned device, thereby solving the technical problem in a method known to the inventors that the augmented reality technology has a poor positioning effect for a three-dimensional object in an actual environment.

## Claims

1. A positioning method for a device, **characterised by**:
obtaining, by an augmented reality device, a first position of an identifier in a virtual coordinate system by scanning the identifier set on a surface of a positioned device (S102);
obtaining, by the augmented reality device, a second position of the identifier on the surface of the positioned device (S104), wherein the second position of the identifier on the surface of the positioned device is a position of the identifier relative to the positioned device in a real coordinate system; and
determining, by the augmented reality device, a position of the positioned device in the virtual coordinate system based on the first position and the second position (S106);
wherein before determining, by the augmented reality device, the position of the positioned device in the virtual coordinate system based on the first position and the second position, the method further comprises:
obtaining, by the augmented reality device, a preset model, wherein the preset model is used to record a position relationship between the positioned device and the identifier; and
wherein obtaining, by the augmented reality device, the second position of the identifier on the surface of the positioned device comprises: obtaining, by the augmented reality device, the second position on the basis of the preset model;
wherein after determining, by the augmented reality device, the position of the positioned device in the virtual coordinate system based on the first position and the second position, the method further comprises: determining, by the augmented reality device, the position of any one of positioned devices relative to other positioned devices in the virtual coordinate system.

2. The method as claimed in claim 1, wherein before obtaining, by the augmented reality device, the first position of the identifier in the virtual coordinate system by scanning the identifier set on the surface of a positioned device, the method further comprises:
receiving, by the augmented reality device, a trigger instruction, wherein the trigger instruction is used to indicate that the positioned device needs to be positioned;
establishing, by the augmented reality device, the virtual coordinate system based on triggering of the trigger instruction.

3. The method as claimed in claim 2, wherein establishing, by the augmented reality device, the virtual coordinate system based on triggering of the trigger instruction comprises:
collecting, by the augmented reality device, a plurality of adjacent images within an environment where the positioned device is located;
extracting, by the augmented reality device, image feature points in the plurality of adjacent images; and
establishing, by the augmented reality device, the virtual coordinate system based on the image feature points in the plurality of adjacent images.

4. The method as claimed in claim 2, wherein
after establishing, by the augmented reality device, the virtual coordinate system based on triggering of the trigger instruction, the method further comprises: determining, by the augmented reality device, the position of the augmented reality device in the virtual coordinate system; and
after determining, by the augmented reality device, the position of the positioned device in the virtual coordinate system based on the first position and the second position, the method further comprises: determining, by the augmented reality device, the position of the augmented reality device relative to the positioned device in the virtual coordinate system.

5. A device, **characterised by**:
a scanning element (30), configured to obtain, by an augmented reality device, a first position of an identifier in a virtual coordinate system by scanning the identifier set on a surface of a positioned device;
a first acquisition element (32), configured to obtain, by the augmented reality device, a second position of the identifier on the surface of the positioned device, wherein the second position of the identifier on the surface of the positioned device is a position of the identifier relative to the positioned device in a real coordinate system; and
a determination element (34), configured to determine, by the augmented reality device, a position of the positioned device in the virtual coordinate system based on the first position and the second position;
wherein the device further comprises:
a second acquisition element, configured to obtain, by the augmented reality device, a preset model, wherein the preset model is used to record a position relationship between the positioned device and the identifier; and
the first acquisition element comprises: a determination sub-element, configured to obtain, by the augmented reality device, the second position on the basis of the preset model;
wherein the device further comprises: a third position determination element, configured to determine, by the augmented reality device, the position of any one of positioned devices relative to other positioned devices in the virtual coordinate system.

6. The device as claimed in claim 5, wherein the device further comprises:
a reception element, configured to receive, by the augmented reality device, a trigger instruction, wherein the trigger instruction is used to indicate that the positioned device needs to be positioned;
an establishment element, configured to establish, by the augmented reality device, the virtual coordinate system based on triggering of the trigger instruction.

7. The device as claimed in claim 6, wherein the establishment element comprises:
a collection sub-element, configured to collect, by the augmented reality device, a plurality of adjacent images within an environment where the positioned device is located;
an extraction sub-element, configured to extract, by the augmented reality device, image feature points in the plurality of adjacent images; and
an establishment sub-element, configured to establish, by the augmented reality device, the virtual coordinate system based on the image feature points in the plurality of adjacent images.

8. The device as claimed in claim 6, wherein the device further comprises:
a first position determination element, configured to determine, by the augmented reality device, the position of the augmented reality device in the virtual coordinate system; and
a second position determination element, configured to determine, by the augmented reality device, the position of the augmented reality device relative to the positioned device in the virtual coordinate system.

9. A storage medium, the storage medium comprises a stored program, wherein when the program is running, it controls a device where the storage medium is located to execute the positioning method for the device according to any one of claims 1 to 4.

## Patentansprüche

1. Positionierungsverfahren für eine Vorrichtung, **gekennzeichnet durch**:
Erhalten einer ersten Position eines Identifikators in einem virtuellen Koordinatensystem durch eine Augmented-Reality-Vorrichtung durch Scannen des Identifikators auf einer Oberfläche einer positionierten Vorrichtung (S102);
Erhalten einer zweiten Position des Identifikators auf der Oberfläche der positionierten Vorrichtung (S104) durch die Augmented-Reality-Vorrichtung, wobei die zweite Position des Identifikators auf der Oberfläche der positionierten Vorrichtung eine Position des Identifikators relativ zu der positionierten Vorrichtung in einem realen Koordinatensystem ist; und
Bestimmen einer Position der positionierten Vorrichtung im virtuellen Koordinatensystem basierend auf der ersten Position und der zweiten Position durch die Augmented-Reality-Vorrichtung (S106);
wobei vor dem Bestimmen der Position der positionierten Vorrichtung in dem virtuellen Koordinatensystem basierend auf der ersten Position und der zweiten Position durch die Augmented-Reality-Vorrichtung das Verfahren ferner Folgendes umfasst:
Erhalten eines voreingestellten Modells durch die Augmented-Reality-Vorrichtung, wobei das voreingestellte Modell verwendet wird, um eine Positionsbeziehung zwischen der positionierten Vorrichtung und dem Identifikator aufzuzeichnen; und
wobei das Erhalten der zweiten Position des Identifikators auf der Oberfläche der positionierten Vorrichtung durch die Augmented-Reality-Vorrichtung Folgendes umfasst: Erhalten der zweiten Position basierend auf dem voreingestellten Modell durch die Augmented-Reality-Vorrichtung;
wobei nach dem Bestimmen der Position der positionierten Vorrichtung in dem virtuellen Koordinatensystem basierend auf der ersten Position und der zweiten Position durch die Augmented-Reality-Vorrichtung das Verfahren ferner Folgendes umfasst: Bestimmen der Position einer beliebigen der positionierten Vorrichtungen relativ zu anderen positionierten Vorrichtungen in dem virtuellen Koordinatensystem durch die Augmented-Reality-Vorrichtung.

2. Verfahren nach Anspruch 1, wobei vor dem Erhalten der ersten Position des Identifikators im virtuellen Koordinatensystem durch die Augmented-Reality-Vorrichtung durch Scannen des Identifikators auf der Oberfläche einer positionierten Vorrichtung, das Verfahren ferner Folgendes umfasst:
Empfangen eines Auslösebefehls durch die Augmented-Reality-Vorrichtung, wobei der Auslösebefehl verwendet wird, um anzuzeigen, dass die positionierte Vorrichtung positioniert werden muss;
Erstellen des virtuellen Koordinatensystems durch die Augmented-Reality-Vorrichtung basierend auf der Auslösung des Auslösebefehls.

3. Verfahren nach Anspruch 2, wobei das Erstellen des virtuellen Koordinatensystems durch die Augmented-Reality-Vorrichtung basierend auf dem Auslösen des Auslösebefehls Folgendes umfasst:
Sammeln einer Vielzahl von benachbarten Bildern innerhalb einer Umgebung, in der sich die positionierte Vorrichtung befindet, durch die Augmented-Reality-Vorrichtung;
Extrahieren von Bildmerkmalpunkten in der Vielzahl von benachbarten Bildern durch die Augmented-Reality-Vorrichtung; und
Erstellen des virtuellen Koordinatensystems durch die Augmented-Reality-Vorrichtung basierend auf den Bildmerkmalspunkten in der Vielzahl der benachbarten Bilder.

4. Verfahren nach Anspruch 2, wobei
nach dem Einrichten des virtuellen Koordinatensystems durch die Augmented-Reality-Vorrichtung basierend auf dem Auslösen des Triggerbefehls, das Verfahren umfasst ferner Folgendes: Bestimmen der Position der Augmented-Reality-Vorrichtung in dem virtuellen Koordinatensystem durch die Augmented-Reality-Vorrichtung; und
nach dem Bestimmen der Position der positionierten Vorrichtung in dem virtuellen Koordinatensystem basierend auf der ersten Position und der zweiten Position durch die Augmented-Reality-Vorrichtung, das Verfahren umfasst ferner Folgendes: Bestimmen der Position der Augmented-Reality-Vorrichtung relativ zu der positionierten Vorrichtung in dem virtuellen Koordinatensystem durch die Augmented-Reality-Vorrichtung.

5. Vorrichtung, **gekennzeichnet durch**:
ein Scanelement (30), das konfiguriert ist, um durch eine Augmented-Reality-Vorrichtung eine erste Position eines Identifikators in einem virtuellen Koordinatensystem zu erhalten, indem der Identifikator auf einer Oberfläche einer positionierten Vorrichtung gescannt wird;
ein erstes Erfassungselement (32), das konfiguriert ist, um durch die Augmented-Reality-Vorrichtung eine zweite Position des Identifikators auf der Oberfläche der positionierten Vorrichtung zu erhalten, wobei die zweite Position des Identifikators auf der Oberfläche der positionierten Vorrichtung eine Position des Identifikators relativ zu der positionierten Vorrichtung in einem realen Koordinatensystem ist; und
ein Bestimmungselement (34), das konfiguriert ist, um durch die Augmented-Reality-Vorrichtung eine Position der positionierten Vorrichtung in dem virtuellen Koordinatensystem basierend auf der ersten Position und der zweiten Position zu bestimmen:
wobei die Vorrichtung ferner Folgendes umfasst:
ein zweites Erfassungselement, das konfiguriert ist, um durch die Augmented-Reality-Vorrichtung ein voreingestelltes Modell zu erhalten, wobei das voreingestellte Modell verwendet wird, um eine Positionsbeziehung zwischen der positionierten Vorrichtung und dem Identifikator aufzuzeichnen; und
das erste Erfassungselement Folgendes umfasst: ein Bestimmungsunterelement, das konfiguriert ist, um durch die Augmented-Reality-Vorrichtung die zweite Position basierend auf dem voreingestellten Modell zu erhalten;
wobei die Vorrichtung ferner Folgendes umfasst: ein drittes Positionsbestimmungselement, das konfiguriert ist, um durch die Augmented-Reality-Vorrichtung die Position einer beliebigen der positionierten Vorrichtungen relativ zu anderen positionierten Vorrichtungen in dem virtuellen Koordinatensystem zu bestimmen.

6. Vorrichtung nach Anspruch 5, wobei die Vorrichtung ferner Folgendes umfasst:
ein Empfangselement, das konfiguriert ist, um von der Augmented-Reality-Vorrichtung eine Auslöseanweisung zu empfangen, wobei die Auslöseanweisung verwendet wird, um anzuzeigen, dass die positionierte Vorrichtung positioniert werden muss;
ein Einrichtungselement, das konfiguriert ist, um durch die Augmented-Reality-Vorrichtung das virtuelle Koordinatensystem basierend auf der Auslösung der Triggeranweisung einzurichten.

7. Vorrichtung nach Anspruch 6, wobei das Einrichtungselement Folgendes umfasst:
ein Sammelnunterelement, das konfiguriert ist, um durch die Augmented-Reality-Vorrichtung eine Vielzahl von benachbarten Bildern innerhalb einer Umgebung zu sammeln, in der sich die positionierte Vorrichtung befindet;
ein Extraktionsunterelement, das konfiguriert ist, um durch die Augmented-Reality-Vorrichtung Bildmerkmalspunkte in der Vielzahl der benachbarten Bilder zu extrahieren; und
ein Errichtungsunterelement, das konfiguriert ist, um durch die Augmented-Reality-Vorrichtung das virtuelle Koordinatensystem basierend auf den Bildmerkmalspunkten in der Vielzahl der benachbarten Bilder zu erstellen.

8. Vorrichtung nach Anspruch 6, wobei die Vorrichtung ferner Folgendes umfasst:
ein erstes Positionsbestimmungselement, das konfiguriert ist, um durch die Augmented-Reality-Vorrichtung die Position der Augmented-Reality-Vorrichtung in dem virtuellen Koordinatensystem zu bestimmen; und
ein zweites Positionsbestimmungselement, das konfiguriert ist, um durch die Augmented-Reality-Vorrichtung die Position der Augmented-Reality-Vorrichtung relativ zu der positionierten Vorrichtung in dem virtuellen Koordinatensystem zu bestimmen.

9. Speichermedium, wobei das Speichermedium ein gespeichertes Programm umfasst, wobei das Programm, wenn es läuft,
eine Vorrichtung steuert, in der sich das Speichermedium befindet, um das Positionierungsverfahren für die Vorrichtung nach einem der Ansprüche 1 bis 4 auszuführen.

## Revendications

1. Procédé de positionnement d'un dispositif, **caractérisé par** :
l'obtention, par un dispositif de réalité augmentée, d'une première position d'un identifiant dans un système de coordonnées virtuel en balayant l'identifiant défini sur une surface d'un dispositif positionné (S102) ;
l'obtention, par le dispositif de réalité augmentée, d'une seconde position de l'identifiant sur la surface du dispositif positionné (S104), dans lequel la seconde position de l'identifiant sur la surface du dispositif positionné est une position de l'identifiant par rapport au dispositif positionné dans un système de coordonnées réel ; et
la détermination, par le dispositif de réalité augmentée, d'une position du dispositif positionné dans le système de coordonnées virtuel sur la base de la première position et de la seconde position (S106) ;
dans lequel avant la détermination, par le dispositif de réalité augmentée, de la position du dispositif positionné dans le système de coordonnées virtuel sur la base de la première position et de la seconde position, le procédé comprend également :
l'obtention, par le dispositif de réalité augmentée, d'un modèle prédéfini, dans lequel le modèle prédéfini est utilisé pour enregistrer une relation de position entre le dispositif positionné et l'identifiant ; et
dans lequel l'obtention, par le dispositif de réalité augmentée, de la seconde position de l'identifiant sur la surface du dispositif positionné comprend : l'obtention, par le dispositif de réalité augmentée, de la seconde position sur la base du modèle prédéfini ;
dans lequel après la détermination, par le dispositif de réalité augmentée, de la position du dispositif positionné dans le système de coordonnées virtuel sur la base de la première position et de la seconde position, le procédé comprend également : la détermination, par le dispositif de réalité augmentée, de la position de l'un quelconque des dispositifs positionnés par rapport à d'autres dispositifs positionnés dans le système de coordonnées virtuel.

2. Procédé selon la revendication 1, dans lequel, avant l'obtention, par le dispositif de réalité augmentée, de la première position de l'identifiant dans le système de coordonnées virtuel en balayant l'identifiant défini sur la surface d'un dispositif positionné, le procédé comprend également :
la réception, par le dispositif de réalité augmentée, d'une instruction de déclenchement, dans lequel l'instruction de déclenchement est utilisée pour indiquer que le dispositif positionné doit être positionné ;
l'établissement, par le dispositif de réalité augmentée, du système de coordonnées virtuel sur la base du déclenchement de l'instruction de déclenchement.

3. Procédé selon la revendication 2, dans lequel l'établissement, par le dispositif de réalité augmentée, du système de coordonnées virtuel sur la base du déclenchement de l'instruction de déclenchement comprend :
la collecte, par le dispositif de réalité augmentée, d'une pluralité d'images adjacentes dans un environnement où se trouve le dispositif positionné ;
l'extraction, par le dispositif de réalité augmentée, de points caractéristiques d'image dans la pluralité d'images adjacentes ; et
l'établissement, par le dispositif de réalité augmentée, du système de coordonnées virtuel sur la base des points caractéristiques d'image dans la pluralité d'images adjacentes.

4. Procédé selon la revendication 2, dans lequel
après l'établissement, par le dispositif de réalité augmentée, du système de coordonnées virtuel sur la base du déclenchement de l'instruction de déclenchement, le procédé comprend également : la détermination, par le dispositif de réalité augmentée, de la position du dispositif de réalité augmentée dans le système de coordonnées virtuel ; et
après la détermination, par le dispositif de réalité augmentée, de la position du dispositif positionné dans le système de coordonnées virtuel sur la base de la première position et de la seconde position, le procédé comprend également : la détermination, par le dispositif de réalité augmentée, de la position du dispositif de réalité augmentée par rapport au dispositif positionné dans le système de coordonnées virtuel.

5. Dispositif, **caractérisé par** :
un élément de balayage (30), configuré pour obtenir, par un dispositif de réalité augmentée, une première position d'un identifiant dans un système de coordonnées virtuel en balayant l'identifiant défini sur une surface d'un dispositif positionné ;
un premier élément d'acquisition (32), configuré pour obtenir, par le dispositif de réalité augmentée, une seconde position de l'identifiant sur la surface du dispositif positionné, dans lequel la seconde position de l'identifiant sur la surface du dispositif positionné est une position de l'identifiant par rapport au dispositif positionné dans un système de coordonnées réel ; et
un élément de détermination (34), configuré pour déterminer, par le dispositif de réalité augmentée, une position du dispositif positionné dans le système de coordonnées virtuel sur la base de la première position et de la seconde position :
dans lequel le dispositif comprend également :
un second élément d'acquisition, configuré pour obtenir, par le dispositif de réalité augmentée, un modèle prédéfini, dans lequel le modèle prédéfini est utilisé pour enregistrer une relation de position entre le dispositif positionné et l'identifiant ; et
le premier élément d'acquisition comprend : un sous-élément de détermination, configuré pour obtenir, par le dispositif de réalité augmentée, la seconde position sur la base du modèle prédéfini ;
dans lequel le dispositif comprend également : un troisième élément de détermination de position, configuré pour déterminer, par le dispositif de réalité augmentée, la position de l'un quelconque des dispositifs positionnés par rapport à d'autres dispositifs positionnés dans le système de coordonnées virtuel.

6. Dispositif selon la revendication 5, dans lequel le dispositif comprend également :
un élément de réception, configuré pour recevoir, par le dispositif de réalité augmentée, une instruction de déclenchement, dans lequel l'instruction de déclenchement est utilisée pour indiquer que le dispositif positionné doit être positionné ;
un élément d'établissement, configuré pour établir, par le dispositif de réalité augmentée, le système de coordonnées virtuel sur la base du déclenchement de l'instruction de déclenchement.

7. Dispositif selon la revendication 6, dans lequel l'élément d'établissement comprend :
un sous-élément de collecte, configuré pour collecter, par le dispositif de réalité augmentée, une pluralité d'images adjacentes dans un environnement où se trouve le dispositif positionné ;
un sous-élément d'extraction, configuré pour extraire, par le dispositif de réalité augmentée, des points caractéristiques d'image dans la pluralité d'images adjacentes ; et
un sous-élément d'établissement, configuré pour établir, par le dispositif de réalité augmentée, le système de coordonnées virtuel sur la base des points caractéristiques d'image dans la pluralité d'images adjacentes.

8. Dispositif selon la revendication 6, dans lequel le dispositif comprend également :
un premier élément de détermination de position, configuré pour déterminer, par le dispositif de réalité augmentée, la position du dispositif de réalité augmentée dans le système de coordonnées virtuel ; et
un deuxième élément de détermination de position, configuré pour déterminer, par le dispositif de réalité augmentée, la position du dispositif de réalité augmentée par rapport au dispositif positionné dans le système de coordonnées virtuel.

9. Support de stockage, le support de stockage comprend un programme stocké, dans lequel, lorsque le programme est en cours d'exécution, il commande un dispositif dans lequel se trouve le support de stockage pour exécuter le procédé de positionnement du dispositif selon l'une quelconque des revendications 1 à 4.
